# EUROPEAN PATENT APPLICATION

(11) **EP 3 760 501 A1**
(43) Date of publication of application: **06.01.2021**
(21) Application number: 18908108.6
(22) Date of filing: 15.06.2018
(51) Int. Cl.: B60S 5/06

(54) **BATTERY STORAGE LOCATION, BATTERY TRANSPORTATION DEVICE, BATTERY STORAGE AND TRANSPORTATION SYSTEM AND BATTERY OPERATING PLATFORM**

(30) Priority: 28.02.2018 CN 201820281727 U
(71) Applicant: NIO (ANHUI) HOLDING CO., LTD, Economic and Technological Development Zone Hefei Anhui 230601 (CN)
(72) Inventor: QI, Wengang, Jiading Shanghai (CN); ZHAO, Zhiling, Jiading Shanghai (CN); HAO, Zhanduo, Jiading Shanghai (CN); YANG, Chao, Jiading Shanghai (CN)
(74) Representative: Vossius & Partner Patentanwälte Rechtsanwälte mbB
(86) International application number: PCT/CN2018/091523
(87) International publication number: WO 2019/165726

(57) **Abstract**

The invention relates to a battery storage space, a battery transportation device, a battery storage and transportation system, and a battery operation platform. The battery storage space is provided with a delivery component for moving a battery into a preset position in the battery storage space for storage and charging, and is further provided with a positioning component configured to adapt to a profile of the battery for positioning the battery in the preset position. The battery transportation device is configured for transferring an externally received battery to the delivery component in the battery storage space, or transferring a battery from the delivery component and transporting the battery outward, and is provided with a limiting component adapted to the profile of the battery for limiting the battery in the battery transportation device. The invention has many advantages such as compact in structure, simple, reliable and high precise in battery positioning, good in maintainability, and low in cost.

## Description

### Technical Field

The invention relates to the technical field of vehicles, and in particular to a battery storage space, a battery transportation device, a battery storage and transportation system, and a battery operation platform.

### Background Art

With the progress of science and technology and the development of society, various types of new energy vehicles such as battery electric vehicles and hybrid electric vehicles are increasingly widely used. With regard to these novel vehicles, technologies involving fast battery swapping and the like have increasingly become a focus and research topic in this field. For example, the battery power supplement time will be an important indicator, if the user experience of battery charging for vehicles is to overmatch that of the fuelling for traditional vehicles. Battery swapping is a way to achieve quick power supplement. Before breakthrough progress is made in battery technology and available safe quick charging technology occurs, battery swapping will still be the most possible way to alleviate users' anxiety about available driving range, and to achieve that the vehicle battery power supplement time can be comparable to or even overmatch that of the fuelling for traditional vehicles.

How to achieve fast charging, energy supplement and reliable and safe charging is a difficulty and key core technology for wide use of battery swap technology and commercial operation for large-scale battery swap. Although various battery swap approaches, and corresponding apparatuses, devices or systems have emerged so far, these existing technologies usually implement battery positioning based on features such as holes in a surface of a battery during battery transportation, charging and storage, etc., which results in a too complicated positioning operation, high apparatus costs and a large occupied space, as well as poor reliability, so that it is difficult to achieve simple, fast, precise and reliable battery positioning. Therefore, it is quite necessary to carry out adequate studies on the existing problems or defects including those mentioned above, so as to make improvements.

### Summary of the Invention

In view of this, the invention provides a battery storage space, a battery transportation device, a battery storage and transportation system, and a battery operation platform, effectively solving or alleviating one or more of the above-mentioned problems and other problems in the prior art.

First, according to a first aspect of the invention, a battery storage space is provided, which is provided with a delivery component for moving a battery into a preset position in the battery storage space for storage and charging, and is further provided with a positioning component configured to adapt to a profile of the battery for positioning the battery in the preset position.

In the battery storage space according to the invention, optionally, the positioning component comprises:
positioning guide members disposed on two sides of an interior of the battery storage space for guiding the battery to move toward the preset position; and
a first positioning block and a second positioning block respectively disposed in end regions of the preset position for abutting against two ends of the battery to restrict the movement of the battery to position the battery in the preset position.

In the battery storage space according to the invention, optionally, each of the positioning guide members is provided with a guide slope, the first positioning block is provided with a recessed portion matching a protrusion at one end of the profile of the battery, and the second positioning block with a recessed portion matching a protrusion at the other end of the profile of the battery.

In the battery storage space according to the invention, optionally, the delivery component is a conveying roller, a conveying belt, or a conveying chain.

In the battery storage space according to the invention, optionally, the battery storage space is arranged to be expandably stacked in a vertical direction.

Additionally, according to a second aspect of the invention, a battery transportation device is provided, which is configured for transferring an externally received battery to a delivery component in a battery storage space as described in any one of the above, or transferring a battery from the delivery component and transporting the battery outward, and is provided with a limiting component adapted to the profile of the battery for limiting the battery in the battery transportation device.

In the battery transportation device according to the invention, optionally, the limiting component comprises:
limiting guide members disposed on two sides of an interior of the battery transportation device for guiding the battery to move in the battery transportation device; and
at least one positioning block disposed at an end of the interior of the battery transportation device for abutting against a section of the profile of the battery to restrict the movement of the battery to position the battery in a preset position within the battery transportation device.

In the battery transportation device according to the invention, optionally, each of the limiting guide members is provided with a guide slope, the section is provided with a protrusion, and the at least one positioning block is provided with a recessed portion matching the protrusion.

In the battery transportation device according to the invention, optionally, the battery transportation device is provided with a conveying roller, a conveying belt, or a conveying chain.

In the battery transportation device according to the invention, optionally, the battery transportation device is provided with a speed sensor for detecting the operating speed thereof.

In addition, according to a third aspect of the invention, a battery storage and transportation system is further provided, which comprises:
at least one battery storage rack provided with one or more battery storage spaces as described in any one of the above; and
a battery transportation device as described in any one of the above arranged adjacent to the battery storage rack.

In the battery storage and transportation system according to the invention, optionally, the battery storage and transportation system is provided with two battery storage racks respectively arranged on two sides of the battery transportation device.

Additionally, according to a fourth aspect of the invention, a vehicle battery operation platform is further provided, which is provided with one or more battery storage and transportation systems as described in any one of the above.

Compared with the prior art, the system of the invention has many advantages such as compact in structure, simple, reliable and high precise in battery positioning, good in maintainability, and low in cost. The technical solutions of the invention can not only precisely and efficiently position the battery during operations such as the transportation, charging and storage of the battery, but can also significantly reduce the complexity and cost of the device itself, and effectively protect the battery itself and related components from collision damage, thereby enhancing the space utilization rate, reliability and expandability of a battery storage and charging and swapping system.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.

Fig. 1 is a schematic perspective structural diagram of an embodiment of a battery storage and transportation system according to the invention, wherein an example of a battery storage space and an example of a battery transportation device according to the invention are shown at the same time.

Fig. 2 is a schematic structural top view of the embodiment of the system shown in Fig. 1.

Fig. 3 is a schematic structural side view of the embodiment of the system shown in Fig. 1.

Fig. 4 is a schematic perspective structural diagram of a positioning guide member in an example of a battery storage space of a battery storage rack in the embodiment of the system shown in Fig. 1.

Figs. 5 and 6 are respectively schematic perspective structural diagrams of two positioning blocks in an example of the battery storage space of the battery storage rack in the embodiment of the system.

### Detailed Description of Embodiments

First, it needs to be noted that structures, compositions, features, advantages, etc., of a battery storage space, battery transportation device, battery storage and transportation system and battery operation platform of the invention will be specifically described below by way of example. However, all the descriptions are for the purpose of illustration only and should not be construed as limiting the invention in any way. The technical term "battery" as used herein includes, but is not limited to, a battery, a set of batteries, a battery pack, etc. used to power a vehicle.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Additionally, in order to simplify the figures, the same or similar parts and features may only be marked at one or several places in one and the same figure.

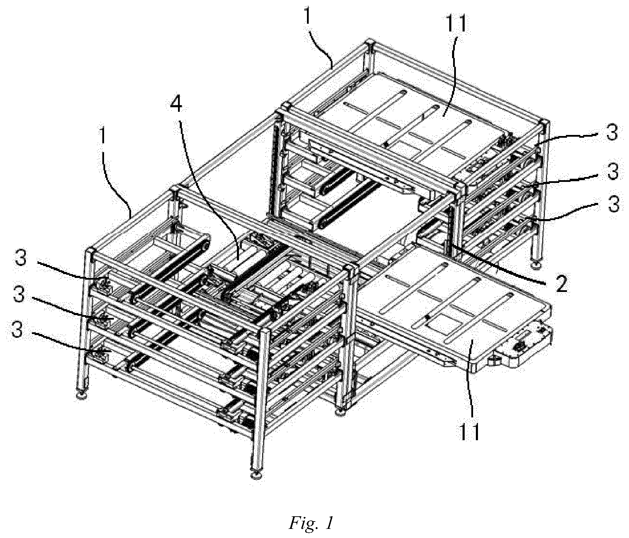

In Figs. 1 to 3, a basic structural configuration of an embodiment of a battery storage and transportation system according to the invention is exemplarily and generally shown based on different angles of view respectively, wherein two battery storage racks 1 and a battery transportation device 2 arranged therebetween are shown at the same time. The two battery storage racks 1 are each exemplarily shown provided with a plurality of battery storage spaces 3 provided according to the invention. The technical solution of the invention will be described in detail below in conjunction with the embodiment of the system.

In this example of the battery storage and transportation system, the battery storage rack 1 is provided for storing batteries, and the batteries may be charged and supplemented with energy by various suitable charging devices arranged on or near the battery storage rack 1. Such batteries include but are not limited to, for example, used batteries and faulty batteries, etc. that are unloaded from battery electric vehicles, hybrid electric vehicles, and other types of vehicles. Specifically, as shown in Fig. 1, according to actual application requirements, the battery storage rack 1 may be provided with one or more battery storage spaces 3 to serve as storage spaces of the batteries. For example, if the work site space is sufficient and the demand for batteries is large, a larger number of battery storage spaces 3 can be optionally stacked in a vertical direction, and on the contrary, the battery storage spaces 3 that exceed the permitted capacity of the site or that are not needed may also be very conveniently and quickly removed from the battery storage rack 1 to form a compact layout, which can not only enable a fairly flexible expandability of this system in term of battery storage and charging capacity, but can also very effectively improve the space utilization rate.

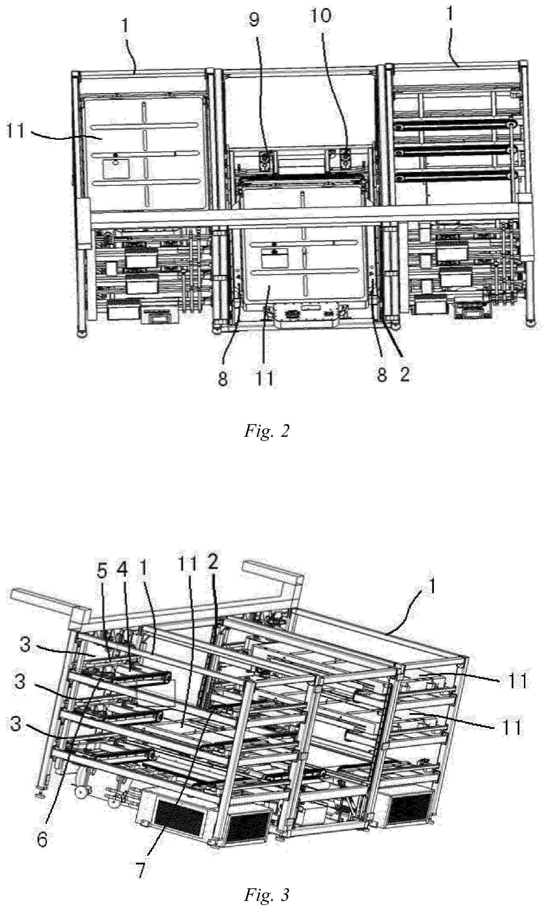

For each battery storage space 3, the battery storage space 3 may be internally provided with a delivery component 4 and positioning components such as positioning guide members 5, a positioning block 6, and a positioning block 7 exemplarily illustrated in Figs. 3 to 6. The delivery component 4 may be in the form of a component such as a conveying roller, a conveying belt, or a conveying chain, and is used for battery exchange with the battery transportation device 2 and transportation, that is, moving the battery 11 carried to the battery storage space 3 via the battery transportation device 2 into a preset position inside the battery storage space for performing various possible operations thereon such as safe storage, power replenishing and moving out of the battery storage space. To ensure that the battery 11 can be accurately and reliably placed in the above-mentioned preset position without undesirable situations such as positional deviation and misalignment, a positioning component is particularly provided in the battery storage space 3 provided according to the invention. Such a positioning component having a structure adapted to the profile of the battery 11 (for example, a machined surface feature of the battery) is provided for guiding, restraining, and defining the position of the battery 11 in the battery storage space 3, such that the battery 11 can be finally located in the desired preset position. It should be noted that the above method in the invention can not only achieve very simple, reliable and precise positioning of the battery 11 in the three-dimensional space, but can also greatly reduce the complexity and the manufacturing and maintenance costs of the existing device itself.

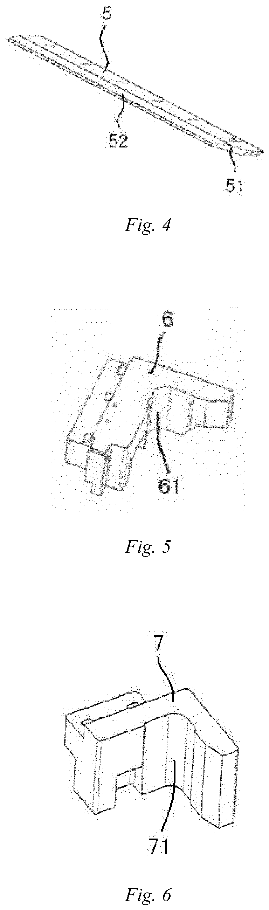

As an example, basic structural configurations of the positioning guide members 5, the positioning block 6 and the positioning block 7 which are used to provide the function of the above-mentioned positioning component are schematically shown in Figs. 4, 5, and 6, respectively. The positioning guide members 5 may be arranged on two sides of the interior of the battery storage space 3 so as to guide the battery 11 to move toward the desired preset position during the movement of the battery 11 into the battery storage space 3 by the delivery component 4. In this example, guide slopes 51, 52 are optionally provided on the positioning guide member 5, such that the guide slopes are in matching contact with the corresponding structural features on the battery 11. In this way, it is possible to guide the battery 11 to move to the preset position inside the battery storage space 3 in a desired movement trajectory.

It should be understood that the positioning guide member 5 with the guide slopes 51, 52 can achieve the preliminary positioning of the battery 11 in the battery storage space 3 in a direction of the movement trajectory, wherein the guide slope 51 provided at an end portion of the positioning guide member 5 will help to quickly guide the battery 11 into the intended movement trajectory, and the guide slope 52 is provided on a lateral portion of the positioning guide member 5 and extends in a lengthwise direction of the positioning guide member 5 into an elongated shape, so that the battery 11 can be continuously moved in the intended movement trajectory until the battery 11 is transported to the preset position inside the battery storage space 3, that is, the precise positioning of the battery 11 inside the battery storage space 3 is achieved.

In addition, for the positioning block 6 and the positioning block 7, as shown in Fig. 3, these positioning blocks are respectively arranged in end regions of the preset position inside the battery storage space 3, such that the positioning blocks can abut against two corresponding ends of the battery 11 to restrict the further movement of the battery 11 inside the battery storage space 3, so as to very precisely and reliably position the battery 11 in the desired preset position for performing various subsequent possible operations, such as safe storage, power replenishing and moving out of the battery storage space, on the battery 11.

As an exemplary illustration, in an optional case, the positioning block 6 and the positioning block 7 may be respectively provided with a recessed portion 61 and a recessed portion 71 as shown in Figs. 5 and 6, such recessed portions are configured to match the profiles of respective protrusions provided at two ends of the battery 11, so that the battery 11 may precisely located in the preset position by the matched abutting of the recessed portions against the protrusions.

Referring to Figs. 1 to 3, an example of the battery transportation device for transporting a battery provided according to the invention will be describe in detail below. The battery may be handed over and delivered from the outside of the system to the battery transportation device 2 via a delivery mechanism, for example, commonly referred to as a "battery swap trolley (RGV)". In the given embodiment, the battery transportation device 2 is in the form of a lifter and uses a plurality of sets of conveying rollers. However, it should be understood that the invention absolutely allows that the battery transportation device 2 may be in more implementation forms (for example, in some cases, a conveying belt or a conveying chain may be used to deliver the battery), and the battery transportation device 2 is also allowed to have a more complicated structure, for example, it is provided with one or more speed sensors to detect the operating speed of the battery transportation device 2, such that the actual operation of the battery transportation device 2 can be controlled more precisely and in a timely manner, achieving the precise and reliable positioning of the battery 11 on the battery transportation device 2.

By means of the battery transportation device 2, first, the battery 11 (which is, for example, a used battery or a faulty battery or an abnormal battery, etc. that is unloaded from a battery electric vehicle, a hybrid electric vehicle, and other types of vehicles) delivered from the delivery mechanism can be loaded on the battery transportation device, the battery 11 is then transported by the battery transportation device 2 to any suitable vacant battery storage space 3 in the battery storage rack 1, and the battery transportation device 2 in the form of the lifter and an opening of the battery storage space 3 may be positionally aligned with each other in the vertical direction by carrying out the second lifting operation, the battery 11 is then handed over to the delivery component 4 of the battery storage space 3, and the battery 11 is then very precisely and reliably limited in the preset position inside the battery storage space 3 by matching the delivery component 4 with the positioning component discussed above. It is not difficult to understand that, contrary to the above process, the battery transportation device 2 may also be used to transfer a suitable battery 11 (such as fully charged or supplemented with most of the power) located in any battery storage space 3 of the battery storage rack 1 out of the battery storage space from the delivery component 4 of the battery storage space 3, and the battery 11 is then delivered outward to meet the application requirements, for example, the battery 11 is transported and mounted to a vehicle with a battery to be swapped that is parked on a battery swap platform, completing a battery swap operation of the vehicle.

To ensure that the battery transportation device 2 can safely and reliably transport the battery 11, a limiting component may be provided on the battery transportation device 2, and such a limiting component is configured to have a structure that adapts to the profile of the battery 11, such that the battery 11 can be very accurately and reliably limited in a preset position on the battery transportation device 2.

By way of example, the perspective structure of the above embodiment is schematically shown in Fig. 3 in a top view, wherein limiting guide members 8 and positioning blocks 9, 10 are clearly illustrated as examples only. As shown in Fig. 3, the limiting guide members 8 are disposed on two sides of the interior of the battery transportation device 2, and the battery 11 is guided by the limiting guide members to move in the battery transportation device 2 in an intended movement trajectory, achieving the preliminary positioning of the battery 11 in a direction of the movement trajectory. The two positioning blocks 9, 10 are disposed at end portions of the interior of the battery transportation device 2, and are used for abutting against a section of the profile of the battery 11, such that the movement of the battery 11 on the battery transportation device 2 can be restrained, and the battery 11 is finally precisely positioned in the preset position within the battery transportation device 2 for subsequent safe and reliable battery transportation operations.

It can be understood that, since the structures of the positioning components such as the positioning guide members 5, the positioning block 6, and the positioning block 7 in the battery storage space 3 have been described in detail in the foregoing, their corresponding structural features (for example, the guide slopes, and the recessed portions, etc.) may be applied to the limiting guide members 8, the positioning block 9 and the positioning block 10 of the battery transportation device 2, respectively. Reference may be made directly to the specific description of corresponding portions hereinbefore, and unnecessary repetition is omitted here. In addition, in the given embodiment, the positioning guide members 5 and the limiting guide members 8 are both configured to have an elongated shape. Such a structural configuration facilitates a simple, reliable and accurate battery positioning when the battery is handed over between the battery transportation device 2 and the delivery mechanism or when the battery is handed over between the battery transportation device 2 and the delivery component 4 in the battery storage space 3, and has a small and compact design structure, a very little occupied space and a good adjustability, so that the battery can be effectively prevented and protected from collision damage during transportation.

In addition, according to another technical solution of the invention, a battery operation platform is further provided, which may be provided with one or more battery storage and transportation systems designed and provided according to the invention to perform safe and reliable operations, such as storage, charging, transportation, on the battery by this system, and in particular to ensure that the battery can be simply, reliably, and accurately positioned during these operations. It should be understood that the operations that can be achieved by the battery operation platform include, but are not limited to, battery swap, charging, and monitoring of battery information (such as state of charge, health level, number of uses, etc. of a battery), and after completing the charging and energy supplement, the battery can be loaded into various types of new energy vehicles such as battery electric vehicles and hybrid electric vehicles, and put into use.

The battery storage space, the battery transportation device, the battery storage and transportation system and the battery operation platform according to the invention are merely illustrated in detail as above by way of example. These examples are for the purpose of illustrating the principle of the invention and the implementations thereof only, rather than limiting the invention. Those skilled in the art can make various variations and improvements without departing from the spirit and scope of the invention. For example, in certain practical application scenarios, it is possible to provide one or not less than three positioning blocks on the foregoing battery transportation device 2, that is to say, the specific number of the positioning blocks and the arrangement positions and actual structural configurations thereof, etc. are all allowed to be selected and adjusted. As another example, although two battery storage racks 1 are provided in the foregoing embodiment and are arranged on two sides of the battery transportation device 2, in some embodiments, it is possible to arrange only one battery storage rack 1 near the battery transportation device 2 to adapt to a work site with limited layout space, or it is also possible to add more battery storage racks connected in series in respective arrangement directions of the two battery storage racks 1 to increase the battery storage capacity. Therefore, all equivalent technical solutions should fall within the scope of the invention and be defined by the claims of the invention.

## Claims

1. A battery storage space provided with a delivery component for moving a battery into a preset position in the battery storage space for storage and charging, **characterized in that** the battery storage space is further provided with a positioning component configured to adapt to a profile of the battery for positioning the battery in the preset position.

2. The battery storage space according to claim 1, **characterized in that** the positioning component comprises:
positioning guide members disposed on two sides of an interior of the battery storage space for guiding the battery to move toward the preset position; and
a first positioning block and a second positioning block respectively disposed in end regions of the preset position for abutting against two ends of the battery to restrict the movement of the battery to position the battery in the preset position.

3. The battery storage space according to claim 2, **characterized in that** each of the positioning guide members is provided with a guide slope, the first positioning block is provided with a recessed portion matching a protrusion at one end of the profile of the battery, and the second positioning block with a recessed portion matching a protrusion at the other end of the profile of the battery.

4. The battery storage space according to claim 1, 2, or 3, **characterized in that** the delivery component is a conveying roller, a conveying belt, or a conveying chain.

5. The battery storage space according to claim 1, 2, or 3, **characterized in that** the battery storage space is arranged to be expandably stacked in a vertical direction.

6. A battery transportation device configured for transferring an externally received battery to a delivery component in a battery storage space according to any one of claims 1-5, or transferring a battery from the delivery component and transporting the battery outward, **characterized in that** the battery transportation device is provided with a limiting component adapted to a profile of the battery for limiting the battery in the battery transportation device.

7. The battery transportation device according to claim 6, **characterized in that** the limiting component comprises:
limiting guide members disposed on two sides of an interior of the battery transportation device for guiding the battery to move in the battery transportation device; and
at least one positioning block disposed at an end of the interior of the battery transportation device for abutting against a section of the profile of the battery to restrict the movement of the battery to position the battery in a preset position within the battery transportation device.

8. The battery transportation device according to claim 7, **characterized in that** each of the limiting guide members is provided with a guide slope, the section is provided with a protrusion, and the at least one positioning block is provided with a recessed portion matching the protrusion.

9. The battery transportation device according to claim 6, 7, or 8, **characterized in that** the battery transportation device is provided with a conveying roller, a conveying belt, or a conveying chain.

10. The battery transportation device according to claim 6, 7, or 8, **characterized in that** the battery transportation device is provided with a speed sensor for detecting the operating speed thereof.

11. A battery storage and transportation system, **characterized by** comprising: at least one battery storage rack provided with one or more battery storage spaces according to any one of claims 1-5; and a battery transportation device according to any one of claims 6-10 arranged adjacent to the battery storage rack.

12. The battery storage and transportation system according to claim 11, **characterized in that** the battery storage and transportation system is provided with two battery storage racks respectively arranged on two sides of the battery transportation device.

13. A battery operation platform, **characterized in that** the battery operation platform is provided with one or more battery storage and transportation systems according to claim 11 or 12.
